# EUROPEAN PATENT SPECIFICATION

(11) **EP 1 958 883 B1**
(45) Date of publication and mention of the grant of the patent: **27.01.2010**
(21) Application number: 07102328.7
(22) Date of filing: 14.02.2007
(51) Int. Cl.: B65D 47/20, F16K 15/14

(54) **Dispensing valve and a container for holding fluid, provided with such a dispensing valve**
Abgabeventil und damit ausgestatteter Behälter zum Aufnehmen einer Flüssigkeit
Soupape de distribution et conteneur pour fluides, fourni avec une soupape de distribution

(43) Date of publication of application: 20.08.2008
(73) Proprietor: Avesto Tech B.V., 7575BP Oldenzaal (NL)
(72) Inventor: Nijland, Peter Lodewijk Johannes, 7581 DE Losser (NL); Scholten, Niels, 7591 WL Denekamp (NL)
(74) Representative: Bakker, Hendrik

(56) References cited:
- EP-A- 1 493 682
- EP-A1- 0 816 245
- US-A- 3 736 953

## Description

The present invention relates to a dispensing valve. Dispensing valves are commonly used for dispensing fluid from a container. Upon application of pressure to the fluid in the container the valve deforms such that it assumes its open or dispensing position and allows fluid to be dispensed from the container. Once the pressure is lifted, the valve automatically retracts to its closed position sealing the container off.

Dispensing valves improve the ease of use of fluid containers by allowing small quantities of fluid to be dispensed at a time, while leaving the dispensing opening of the container clean of fluid after use. In the closed position dispensing valves provide a reliable seal under all circumstances.

Generally dispensing valves are suitable for use in a wide variety of containers or packages for dispensing all sorts of fluids. The term fluid is used herein to denote any product or medium capable of flowing. A non-limiting list of examples of fluids includes among others: beverages, food condiments, hygienic products.

The dispensing valve for dispensing fluid from a container according to the invention comprises a central member provided with a flexible membrane having at least one slit; a flange surrounding the central member for attaching the valve to the container; and connecting means for connecting the central member to the flange, which connecting means comprise a material hinge, wherein the valve is deformable from a closed position to a dispensing position upon application of pressure to the fluid in the container.

Such a dispensing valve is known from US Patent 6,769,577. The known dispensing valve is a self-closing valve wherein the connecting means comprise a connecting wall having a first area forming an annular section extending in the same plane as the flange or parallel to the flange. The connecting wall further has a second area extending upwardly in curved fashion at an obtuse angle, i.e. away from the container interior when the valve is affixed to the container. A transition zone of the connecting wall near the membrane is configured in hinge-like manner.

Another example is known from EP 0 816 245.

One disadvantage of the known dispensing valve is that it has rather complex connecting means with relatively large dimensions for connecting the central member to the flange.

It is an object of the present invention to provide a dispensing valve of the kind as mentioned above that has a simple and reliable design allowing easy and economical production.

According to the present invention this object is achieved by a dispensing valve according to the preamble of claim 1, characterized in that, the central member is further provided with a support for the flexible membrane, which support is more rigid than the flexible membrane and extends towards the container interior in the secured position of the dispensing valve, wherein the material hinge directly couples the support to the flange.

According to the present invention the connecting means are simple and reliable as they are formed by the hinge alone. The hinge takes up a minimal amount of space as it directly couples the support to the flange. Advantageously this leaves more room for the flexible membrane that may have larger radial dimensions. Additionally as the support is more rigid than the flexible membrane, it cooperates effectively with the hinge to deform the flexible membrane to the desired dispensing position. Furthermore as the support extends towards the container interior in the secured position of the dispensing valve the membrane is positioned inside the container interior and will remain there even when it deforms to the dispensing position.

According to a practical preferred embodiment of a dispensing valve according to the invention the material hinge on the one side is located at the upper part of the flange and on the other side at the lower part of the support. By means of the position of the hinge the support now forms a pedestal for the flexible membrane. Preferably the material hinge on the one side is located at the inner upper edge of the flange and on the other side at the outer lower edge of the support.

According to a first preferred embodiment a second material hinge is arranged on the central member. The second material hinge improves the functioning of the dispensing valve according to the invention. Initially, once the pressure is raised in the container, the second hinge assists in maintaining the shape of the central member, since it forms a weak point that deforms first under stress. Once the pressure is raised to a maximum value and the breaking point of the valve is reached, it will facilitate the sudden opening of the slit.

In a preferred embodiment the second material hinge is located adjacent the support. In an elegant embodiment a first groove is arranged on the central member for forming the second material hinge.

According to a second preferred embodiment a third material hinge is arranged on the central member between the second material hinge and the center of the flexible membrane.

This third hinge will enhance the effect of the second hinge.

In a preferred embodiment the third material hinge is arranged in the vicinity of the slit. In an elegant embodiment a further groove is arranged on the central member for forming the third material hinge.

According to yet another preferred embodiment the support is thicker than the flexible membrane. Advantageously the support is more rigid in order to maintain a rather stable form, whereas the membrane is more flexible.

The invention also relates to a container for holding fluid, provided with a dispensing valve according to the present invention.

These and other features and advantages of the invention will be more apparent with a discussion of a preferred embodiment of the invention and reference to the associated drawings.

The invention will be explained in more detail with reference to the appended drawings, in which:
Fig. 1A shows a longitudinal cross section container provided with a preferred embodiment of a dispensing valve according to the invention;
Fig. 1B shows an enlarged view of part of figure 1 A;
Fig. 2A shows a cross-sectional view of a first embodiment of a dispensing valve according to the invention in closed position;
Fig. 2B shows the dispensing valve of Fig. 2A in open position;
Fig. 2C shows a top view of the dispensing valve of Fig. 2A;
Fig. 2D shows a top view of the dispensing valve of Fig. 2B:
Fig. 3A shows a cross-sectional view of a second embodiment of a dispensing valve according to the invention in closed position;
Fig. 3B shows the dispensing valve of Fig. 3A in open position;
Fig. 3C shows a variant of the second embodiment of Fig. 3A;
Fig. 3D shows the variant of Fig. 3C in open position;
Fig. 4A shows a cross-sectional view of a third embodiment of a dispensing valve according to the invention in closed position; and
Fig. 4B shows the dispensing valve of Fig. 4A in open position.

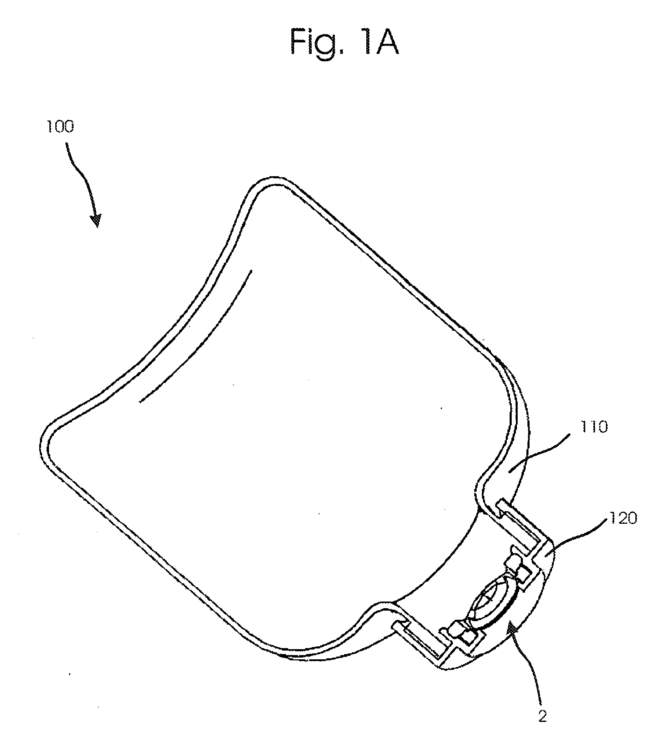

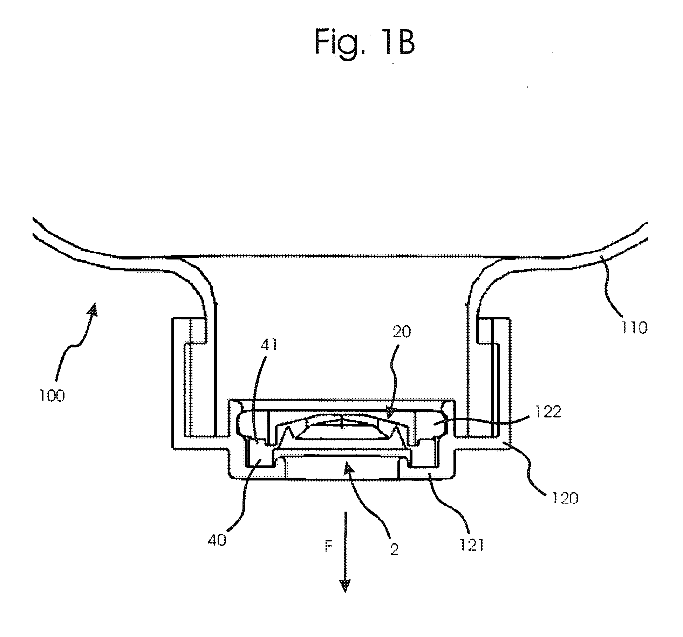

Fig. 1A schematically shows a longitudinal cross section of a container 100 provided with a preferred embodiment of a dispensing valve according to the invention. Figure 1B shows an enlarged view of part of the container 100 of figure 1A. In figure 1B the container and the dispensing valve are shown in the dispensing orientation. The direction of fluid flow is indicated by arrow F. When the terms "upper" or "lower" are used throughout this description they refer to the dispensing orientation.

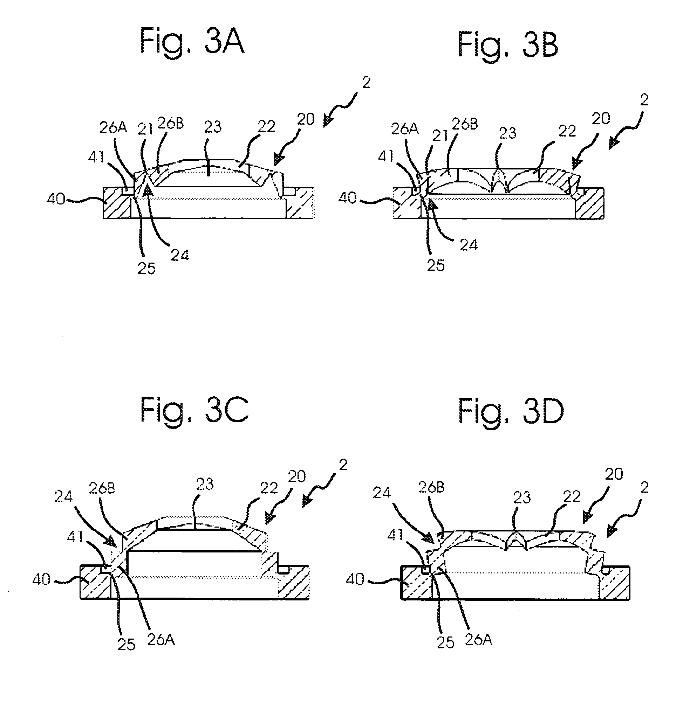

Container 100 comprises a body 110 onto which a cap 120 is attached. Cap 120 is provided with a preferred embodiment 2 of the dispensing valve. The preferred embodiment shown is the second embodiment 2 which will be described in detail below referring to figure 3A. Dispensing valve 2 comprises a central member 20 that is surrounded by a flange 40 for securing the valve in the container cap.

The flange 40 is arranged to be assembled in a snap fit manner. Thereto the flange 40 is provided with a raised edge 42 for a snap fit engagement into a space with matching dimensions present in the interior of the cap of the container. Said space is formed between the lower edge of the cap 121 and inner support 122.

In the following figures a number of preferred embodiments of the dispensing valve according to the invention are shown. All of them are provided with the same flange, but differ with respect to the central member.

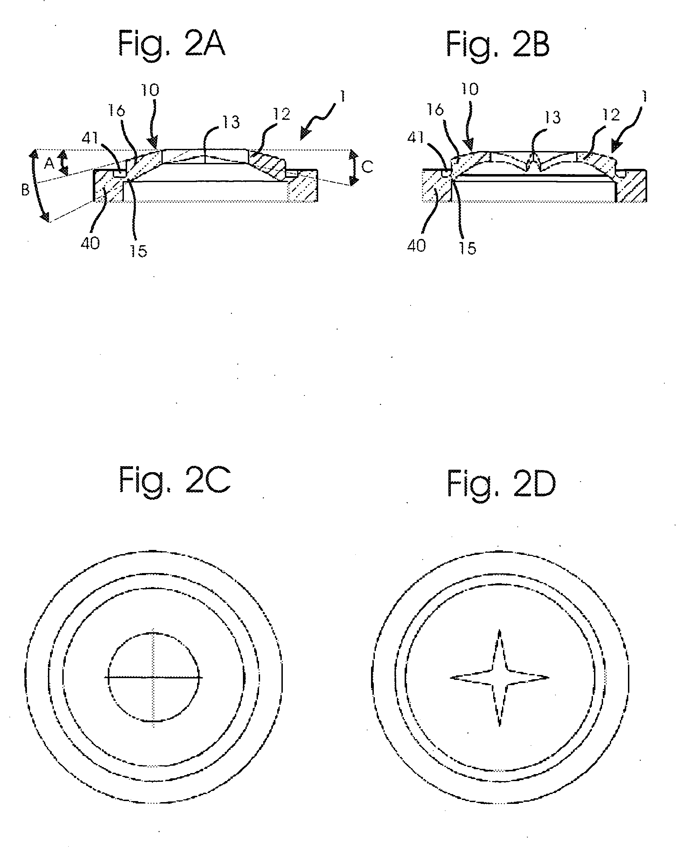

Fig. 2A shows cross-sectional view of a first embodiment of a dispensing valve 1 according to the invention in closed position. Fig. 2B shows the dispensing valve 1 in open position.

Dispensing valve 1 comprises a central member 10 that is provided with a flexible membrane 12 having at least one slit 13. A flange 40 surrounds the central member 10 for securing the valve 1 to a container (see figures 1A and 1B) and is connected to the central member 10 by means of a material hinge 15.

A support 16 for the flexible membrane 12 forms part of the central member 10. In the secured position of the dispensing valve the support 16 is arranged such that it extends inwardly into the container. In the first embodiment shown the support 16 in the closed position extends substantially parallel to the inner wall of the container. The material hinge 15 directly couples the support 16 to the flange 40.

On the one side the material hinge 15 is located at the upper part of the flange 40, preferably at the inner edge thereof. On the other side the material hinge 15 is located at the lower part of the support 16, preferably at the outer edge thereof. The material hinge is formed by a substantially thinner part of the dispensing valve allowing the movement of the central member relative to the flange. The dimensions of the material hinge are preferably relatively small compared to those of the flange and the central member.

The central member 10 has a radially outwardly increasing thickness. The support 16 is thicker than the flexible membrane 12. The upper and lower surfaces of the central member are essentially flat. The corresponding tangent lines are converging under sharp angles. An angle A is defined between the tangent line of the top surface of the flexible membrane 12 and the tangent line of the top surface of the support 16. An angle B is defined between the tangent line of the top surface of the flexible membrane 12 and the tangent line of the bottom surface of the support 16. Angle A differs from angle B. An angle C is defined between the tangent line of the top surface of the flexible membrane 12 and the tangent line of the bottom surface of the flexible membrane 12. Angle C may differ from angle B.

Once the fluid in the container is pressurized the central member 10 deforms to its dispensing position shown in figure 2B. The support 16 is pushed outward and the slit 13 opens automatically.

Fig. 2C shows a top view of the dispensing valve 1 in closed position and Fig. 2D shows a top view of the dispensing valve in open position. As can be seen the shape of the dispensing valve preferably is generally round. The outer shape of the flange and the central member are generally cylindrical. The shape of the material hinge is in conformity therewith.

Fig. 3A shows a cross-sectional view of a dispensing valve 2, which is a second embodiment according to the invention, in closed position. Fig. 3B shows the dispensing valve 20 in open position.

Dispensing valve 2 is largely similar to dispensing valve 1 described above. All reference numerals in figures 3A and 3B are incremented with 10 when compared to the reference numerals of figures 2A and 2B denoting equal parts.

In addition to dispensing valve 1 dispensing valve 2 is provided with a second material hinge 21 located on the central member 20 adjacent the support 26, between the support 26 and the slit 23.

On the central member 20 a first groove 24 is arranged for forming the second material hinge 21. Typically the shape of the groove 24 will be in conformance with the outer circumference of the central member of the valve. Preferably the groove 24 is annular shaped.

By means of the groove the support 26 is divided into two segments, 26A and 26B that are coupled by the material hinge 21.

Fig. 3C shows a variant of the second embodiment of Fig. 3A, wherein the groove 24 is located at the top surface of the central member 20.

Once the fluid in the container is pressurized the central member 20 deforms to its dispensing position shown in figure 3B, respectively 3D. The support 26 is then pushed outward and in both embodiments the groove 24 narrows. Once the break through point is reached, the slit 23 opens automatically.

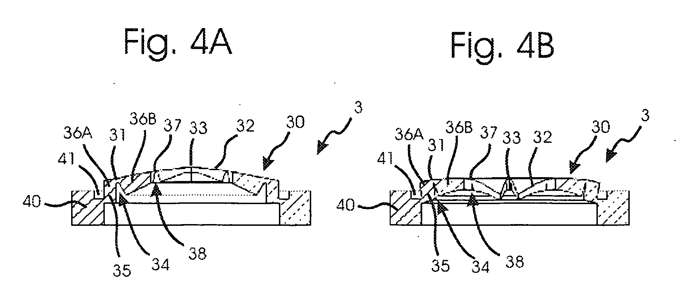

Fig. 4A shows a cross-sectional view of a third embodiment of a dispensing valve according to the invention in closed position. Fig. 4B shows the dispensing valve of Fig. 4A in open position.

Dispensing valve 3 is largely similar to dispensing valve 2 described above. All reference numerals in figures 4A and 4B are incremented with 10 when compared to the reference numerals of figures 3A and 3B denoting equal parts.

In addition to dispensing valve 2 dispensing valve 3 is provided with a third material hinge 37 arranged on the central member 30 between the second material hinge 34 and the center of the flexible membrane 32. In the embodiment shown the hinge 37 lies on the flexible membrane 32 and runs through the slit 33.

On the central member 30 a further groove 38 is arranged for forming the third material hinge 37. Typically the shape of the groove 38 will be in conformance with the outer circumference of the central member of the valve. Preferably the groove 38 is annular shaped.

By means of the groove 38 a further subdivision of the central element into three segments, roughly equal to 36A, 36B and 32, is reached, which segments are coupled two-by-two by the material hinges 31 and 37.

Once the fluid in the container is pressurized the central member 30 deforms to its dispensing position shown in figure 4B. The support 36 is then pushed outward and in both embodiments the grooves 34 and 38 narrow. Once the break through point is reached, the slit 33 opens automatically.

The radially outwardly increasing thickness makes the central member less susceptible to inverting. This is a very important characteristic as an inverted shape remaining after pressure relieve renders the dispensing valve useless. As a direct result of the increasing thickness any deformation of the central member will cause stress in the resilient central member which will force the central member to always return to its original shape when the pressure is relieved.

Generally the invention is based on the inventive thought of providing a dispensing valve with a hinge able support having a double function: firstly it acts as an arm movable due to the hinge construction and secondly it acts as a pedestal for the membrane.

Preferably the dispensing valve or at least the central member thereof according to the invention is made of a suitable elastomeric material, such as thermo set or thermoplastic rubber. The thickness of the support is chosen larger than the thickness of the membrane. Consequently the support is more rigid in order to maintain a rather stable form, whereas the membrane is more flexible. Optionally the material of the flange may be reinforced to facilitate the assembly of the valve in the cap of the container.

It is noted that different variants of the preferred embodiments shown are possible within the scope of the claims.

The dispensing valve according to the invention is preferably universally suitable and can be manufactured in a range of sizes. The dispensing valve is designed for cost effective production thus facilitating the use as a disposable article.

Although the preferred embodiment of the dispensing valve has been described in the context of a fluid dispensing container the invention is not limited thereto. A person skilled in the art will have no difficulty making small changes to the dispensing valve, such as scaling it up, in order to render it suitable for a particular intended use outside this field.

## Claims

1. A dispensing valve (1, 2, 3) for dispensing fluid from a container (100), comprising:
- a central member (10, 20, 30) provided with a flexible membrane (12) having at least one slit;
- a flange (40) surrounding the central member for attaching the valve to the container; and
- connecting means for connecting the central member to the flange, which connecting means comprise a material hinge (15), wherein the valve is deformable from a closed position to a dispensing position upon application of pressure to the fluid in the container,
**characterized in that**,
- the central member is further provided with a support (16, 26, 36) for the flexible membrane, which support is more rigid than the flexible membrane and extends towards the container in the secured position of the dispensing valve, wherein the material hinge directly couples the support to the flange.

2. A dispensing valve according to claim 1, wherein the material hinge on the one side is located at the upper part of the flange and on the other side at the lower part of the support.

3. A dispensing valve according to claim 2, wherein the material hinge on the one side is located at the inner upper edge of the flange and on the other side at the outer lower edge of the support.

4. A dispensing valve according to claim 1, comprising a second material hinge (21) arranged on the central member.

5. A dispensing valve according to claim 4, wherein the second material hinge is located adjacent the support.

6. A dispensing valve according to claim 4 or 5, wherein a first groove (24) is arranged on the central member for forming the second material hinge.

7. A dispensing valve according to claim 4, comprising a third material hinge (37) arranged on the central member between the second material hinge and the center of the flexible membrane.

8. A dispensing valve according to claim 7, wherein the third material hinge is arranged in the vicinity of the slit.

9. A dispensing valve according to claim 7 or 8, wherein a further groove (38) is arranged on the central member for forming the third material hinge.

10. A dispensing valve according to one or more of the preceding claims, wherein the support is thicker than the flexible membrane.

11. Container for holding fluid, provided with a dispensing valve as described in one or more of the preceding claims.

## Patentansprüche

1. Abgabeventil (1, 2, 3) zum Abgeben von Flüssigkeit aus einem Behälter (100), Folgendes umfassend:
- ein Mittelelement (10, 20, 30), das mit einer flexiblen Membran (12) versehen ist, die mindestens einen Schlitz aufweist;
- einen Flansch (40), der das Mittelelement umgibt, um das Ventil am Behälter zu befestigen; und
- Verbindungsmittel zum Verbinden des Mittelelements mit dem Flansch, wobei die Verbindungsmittel ein Materialscharnier (15) umfassen, wobei das Ventil bei Aufbringung von Druck auf die Flüssigkeit im Behälter von einer Schließstellung zu einer Abgabestellung verformbar ist,
**dadurch gekennzeichnet, dass**
- das Mittelelement ferner mit einer Halterung (16, 26, 36) für die flexible Membran versehen ist, wobei die Halterung starrer als die flexible Membran ist und sich in der Sicherungsstellung des Abgabeventils zum Behälter hin erstreckt, wobei das Materialscharnier direkt die Halterung mit dem Flansch verbindet.

2. Abgabeventil nach Anspruch 1, wobei das Materialscharnier an der einen Seite am oberen Teil des Flansches und an der anderen Seite am unteren Teil der Halterung angeordnet ist.

3. Abgabeventil nach Anspruch 2, wobei das Materialscharnier an der einen Seite am inneren oberen Rand des Flansches und an der anderen Seite am äußeren unteren Rand der Halterung angeordnet ist.

4. Abgabeventil nach Anspruch 1, umfassend ein am Mittelelement angeordnetes zweites Materialscharnier (21).

5. Abgabeventil nach Anspruch 4, wobei das zweite Materialscharnier angrenzend an die Halterung angeordnet ist.

6. Abgabeventil nach Anspruch 4 oder 5, wobei eine erste Rinne (24) am Mittelelement angeordnet ist, um das zweite Materialscharnier zu bilden.

7. Abgabeventil nach Anspruch 4, umfassend ein drittes Materialscharnier (37), das am Mittelelement zwischen dem zweiten Materialscharnier und der Mitte der flexiblen Membran angeordnet ist.

8. Abgabeventil nach Anspruch 7, wobei das dritte Materialscharnier in der Nähe des Schlitzes angeordnet ist.

9. Abgabeventil nach Anspruch 7 oder 8, wobei eine weitere Rinne (38) am Mittelelement angeordnet ist, um das dritte Materialscharnier zu bilden.

10. Abgabeventil nach einem oder mehreren der vorangehenden Ansprüche, wobei die Halterung dicker als die flexible Membran ist.

11. Behälter zum Aufnehmen von Flüssigkeit, versehen mit einem Abgabeventil nach einem oder mehreren der vorangehenden Ansprüche.

## Revendications

1. Soupape de distribution (1, 2, 3) pour distribuer un fluide à partir d'un récipient (100), comprenant :
- un élément central (10, 20, 30) pourvu d'une membrane flexible (12) ayant au moins une fente ;
- une bride (40) entourant l'élément central pour fixer la soupape au récipient ; et
- un moyen de connexion pour connecter l'élément central à la bride, lequel moyen de connexion comprend une charnière matérielle (15), dans laquelle la soupape est déformable d'une position fermée jusqu'à une position de distribution à l'application d'une pression au fluide dans le récipient,
**caractérisée en ce que**
- l'élément central est en outre pourvu d'un support (16, 26, 36) pour la membrane flexible, lequel support est plus rigide que la membrane flexible et s'étend vers le récipient dans la position de sécurité de la soupape de distribution, dans laquelle la charnière matérielle couple directement le support à la bride.

2. Soupape de distribution selon la revendication 1, dans laquelle la charnière matérielle sur un côté est située au niveau de la partie supérieure de la bride et sur l'autre côté au niveau de la partie inférieure du support.

3. Soupape de distribution selon la revendication 2, dans laquelle la charnière matérielle sur un côté est située au niveau du bord supérieur intérieur de la bride et sur l'autre côté au niveau du bord inférieur extérieur du support.

4. Soupape de distribution selon la revendication 1, comprenant une deuxième charnière matérielle (21) agencée sur l'élément central.

5. Soupape de distribution selon la revendication 4, dans laquelle la deuxième charnière matérielle est située de façon adjacente au support.

6. Soupape de distribution selon la revendication 4 ou 5, dans laquelle une première rainure (24) est agencée sur l'élément central pour former la deuxième charnière matérielle.

7. Soupape de distribution selon la revendication 4, comprenant une troisième charnière matérielle (37) agencée sur l'élément central entre la deuxième charnière matérielle et le centre de la membrane flexible.

8. Soupape de distribution selon la revendication 7, dans laquelle la troisième charnière matérielle est agencée à proximité de la fente.

9. Soupape de distribution selon la revendication 7 ou 8, dans laquelle une autre rainure (38) est agencée sur l'élément central pour former la troisième charnière matérielle.

10. Soupape de distribution selon une ou plusieurs des revendications précédentes, dans laquelle le support est plus épais que la membrane flexible.

11. Récipient pour contenir un fluide, pourvu d'une soupape de distribution selon une ou plusieurs des revendications précédentes.
